(19) Europäisches Patentamt / European Patent Office / Office européen des brevets

(11) **EP 4 057 380 A2**

(12) **EUROPEAN PATENT APPLICATION**

(43) Date of publication:
**14.09.2022 Bulletin 2022/37**

(21) Application number: **22160615.5**

(22) Date of filing: **07.03.2022**

(51) International Patent Classification (IPC):
**H01M 4/13** (2010.01)    **H01M 4/62** (2006.01)
**H01M 10/052** (2010.01)    **H01M 4/02** (2006.01)

(52) Cooperative Patent Classification (CPC):
**H01M 4/625; H01M 4/13; H01M 10/052;**
H01M 2004/028

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.03.2021 KR 20210030039**

(71) Applicant: **SK Innovation Co., Ltd.**
**Seoul 03188 (KR)**

(72) Inventors:
• **LEE, Yong Seok**
  **34124 Daejeon (KR)**
• **KIM, Jae Ram**
  **34124 Daejeon (KR)**
• **KIM, Jung Hwan**
  **34124 Daejeon (KR)**
• **MIN, Jae Yun**
  **34124 Daejeon (KR)**
• **BAE, Sang Won**
  **34124 Daejeon (KR)**
• **BAE, Ji Hee**
  **34124 Daejeon (KR)**
• **LEE, Myung Ro**
  **34124 Daejeon (KR)**
• **LEE, Jae Yeong**
  **34124 Daejeon (KR)**

(74) Representative: **Stolmár & Partner**
**Patentanwälte PartG mbB**
**Blumenstraße 17**
**80331 München (DE)**

(54) **POSITIVE ELECTRODE FOR LITHIUM SECONDARY BATTERY AND LITHIUM SECONDARY BATTERY INCLUDING THE SAME**

(57)    Provided is a positive electrode for a lithium secondary battery including: a current collector; and a positive electrode active material layer including a positive electrode active material and carbon nanotubes, placed on the current collector, wherein the carbon nanotubes have $I_D/I_G$ of 0.10 or less, the $I_D/I_G$ being a ratio of a peak intensity of a D band divided by a peak intensity of a G band in a Raman spectrum.

【FIG. 4】

**Description**

[Technical Field]

The following disclosure relates to a positive electrode for a lithium secondary battery and a lithium secondary battery including the same.

[Background Art]

Recently, as the demand for electronic devices such as mobile devices increases, development of weight reduction and miniaturization of a lithium secondary battery for increasing portability of the electronic devices is being expanded. Along with this trend, as regulations related to automobile fuel efficiency and exhaust gas are reinforced, the growth of the electric vehicle (EV) market is accelerated, and development of a high-output large-capacity battery for use of the electric vehicle is demanded.

Typically, a lithium secondary battery is formed of a structure in which an electrode structure including a positive electrode including a positive electrode active material, a negative electrode including a negative electrode active material, and a separator interposed between the positive electrode and the negative electrode is impregnated with an electrolyte. As the positive electrode active material, lithium transition metal oxides such as lithium cobalt-based oxides, lithium manganese oxides, and lithium nickel-based oxides are mainly used, as the negative electrode active material, carbon-based materials are mainly used, conductive materials are generally added for improving the electrical conductivity of the active material, and in particular, in the case of the positive electrode, since the conductivity of the positive electrode active material is low, it is essentially required to add a conductive material.

As the conductive material, a point type (particulate) conductive material such as natural graphite or artificial graphite is mainly used, and in recent years, in order to solve a problem of blocking voids between active material particles by the point type conductive material, a technology using a linear conductive material together with the point type conductive material has been developed.

However, since the linear conductive material, in particular, a linear conductive material such as carbon nanotubes, has a large surface area as compared with the point type conductive material, it causes a side reaction by an electrolyte solution under high temperature conditions, thereby deteriorating battery characteristics. Thus, development of a new technology to solve a deterioration problem at a high temperature while showing stable and excellent electrical properties without damaging a pores structure of active material particles.

In addition, in order to develop a high-output large-capacity battery appropriate for a car battery, a high-density/high-loading electrode is demanded. Thus, development of an electrode which secures both stable electrical conduction properties and ion conduction properties and has a long lifespan with a minimum amount of a conductive material for increasing an active material fraction in the electrode is demanded.

[Related Art Documents]

[Patent Documents]

Korean Patent Laid-Open Publication No. 10-2017-0111517

[Summary of Invention]

[Technical Problem]

An embodiment of the present invention is directed to providing a positive electrode for a lithium secondary battery having excellent electrical properties and excellent high temperature cycle characteristics.

Another embodiment of the present invention is directed to providing a positive electrode for a lithium secondary battery in which a pore structure by an empty space between particles is not damaged so that a contact with an electrolyte solution is smooth and which has a high active material fraction to be appropriate for a high-output battery.

[Solution to Problem]

In one general aspect, a positive electrode for a lithium secondary battery includes: a current collector; and a positive electrode active material layer including a positive electrode active material and carbon nanotubes, placed on the current collector, wherein the carbon nanotubes have $I_D/I_G$ of 0.10 or less, the $I_D/I_G$ being a ratio of a peak intensity of a D band divided by a peak intensity of a G band in a Raman spectrum.

In the positive electrode for a lithium secondary battery according to an exemplary embodiment, the ID/IG may be 0.05 or less.

In the positive electrode for a lithium secondary battery according to an exemplary embodiment, the positive electrode active material may have a bimodal particle size distribution.

In the positive electrode for a lithium secondary battery according to an exemplary embodiment, $D1_{50}/D2_{50}$ may be 0.15 to 0.35, the $D1_{50}/D2_{50}$ being a ratio of $D1_{50}$ which is an average particle diameter of a first distribution as a small particle size distribution divided by $D2_{50}$ which is an average particle diameter of a second distribution as a large particle size distribution in the bimodal particle size distribution.

In the positive electrode for a lithium secondary battery according to an exemplary embodiment, a mass ratio of the positive electrode active material belonging to the first distribution to the positive electrode active material belonging to the second distribution may be 1:2 to 5.

In the positive electrode for a lithium secondary battery according to an exemplary embodiment, a long axis length of the carbon nanotubes may be $0.5D2_{50}$ to $5D2_{50}$, based on $D2_{50}$ which is the average particle diameter of the second distribution as a large particle size distribution in the bimodal particle size distribution.

In the positive electrode for a lithium secondary battery according to an exemplary embodiment, at least, the positive electrode active material belonging to the second distribution as a large particle size distribution in the bimodal particle size distribution may be secondary particles.

In the positive electrode for a lithium secondary battery according to an exemplary embodiment, the positive electrode active material layer may further include a point type carbon-based conductive material.

In the positive electrode for a lithium secondary battery according to an exemplary embodiment, the point type carbon-based conductive material may include carbon black.

In the positive electrode for a lithium secondary battery according to an exemplary embodiment, the carbon black may be one or more selected from acetylene black, Ketjen black, channel black, furnace black, lamp black, and thermal black.

In the positive electrode for a lithium secondary battery according to an exemplary embodiment, the positive electrode active material layer may include 2 parts by weight or less of a conductive component including a linear conductive material including the carbon nanotubes and the point type carbon-based conductive material, based on 100 parts by weight of the positive electrode active material.

In the positive electrode for a lithium secondary battery according to an exemplary embodiment, a mass ratio of the carbon nanotubes to the point type carbon-based conductive material included in the positive electrode active material layer may be 1:0.2 to 3.

In the positive electrode for a lithium secondary battery according to an exemplary embodiment, the positive electrode may satisfy the following Equation 1:

$$\text{(Equation 1)}$$
$$RB/RB(ref) \leq 0.2$$

wherein RB is bulk resistance of the positive electrode for a lithium secondary battery, RB(ref) is bulk resistance of a reference positive electrode which has the same composition as the positive electrode for a lithium secondary battery, but has ID/IG in a Raman spectrum of the carbon nanotubes included of 1.0 or more.

In another general aspect, a lithium secondary battery includes the positive electrode described above.

In the lithium secondary battery according to a specific example, a capacity retention rate based on 1000 charge and discharge cycles at room temperature may be 88% or more.

[Advantageous Effects of Invention]

The positive electrode for a lithium secondary battery according to the present invention includes carbon nanotubes having $I_D/I_G$ of 0.10 or less, thereby greatly lowering internal resistance of an active material layer with a small amount of a conductive material, and improving high temperature properties.

[Brief Description of Drawings]

FIG. 1 is a drawing illustrating a measured particle size distribution of a positive electrode active material.
FIG. 2 is scanning electron micrographs of a mixture of a coarse active material and a fine active material.

FIG. 3 is a scanning electron micrograph of carbon black.

FIG. 4 is a drawing illustrating a measured Raman spectrum of carbon nanotubes included in the positive electrode active material layer produced in Example 1.

FIG. 5 is a drawing illustrating a measured Raman spectrum of carbon nanotubes included in the positive electrode active material layer produced in Comparative Example 1.

FIG. 6 is photographs of cross sections of positive electrodes produced in Example 1 ((a) of FIG. 6) and Example 2 ((b) of FIG. 6).

FIG. 7 is a drawing illustrating a measured resistance increase rate of a positive electrode depending on the number of high temperature cycles during high temperature charging and discharging of the secondary batteries produced in Example 3 and Comparative Example 1.

[Description of Embodiments]

Hereinafter, the positive electrode for a lithium secondary battery of the present invention will be described in detail with reference to the accompanying drawing. The drawings to be provided below are provided by way of example so that the idea of the present invention can be sufficiently transferred to a person skilled in the art to which the present invention pertains. Therefore, the present invention is not limited to the drawings provided below but may be embodied in many different forms, and the drawings suggested below may be exaggerated in order to clear the spirit of the present invention. Technical terms and scientific terms used herein have the general meaning understood by those skilled in the art to which the present invention pertains unless otherwise defined, and a description for the known function and configuration which may unnecessarily obscure the gist of the present invention will be omitted in the following description and the accompanying drawings.

In addition, the singular form used in the specification and claims appended thereto may be intended to also include a plural form, unless otherwise indicated in the context.

In the present specification and the appended claims, the terms such as "first" and "second" are not used in a limited meaning but used for the purpose of distinguishing one constitutional element from other constitutional elements.

In the present specification and the appended claims, the terms such as "comprise" or "have" mean that there is a characteristic or a constitutional element described in the specification, and as long as it is not particularly limited, a possibility of adding one or more other characteristics or constitutional elements is not excluded in advance.

In the present specification and the appended claims, when a portion such as a film (layer), a region, and a constitutional element are present on another portion, not only a case in which the portion is in contact with and directly on another portion but also a case in which other films (layers), other regions, other constitutional elements are interposed between the portions is included.

The present applicant found that in a positive electrode for a lithium secondary battery based on the linear conductive material of carbon nanotubes, the internal resistance and the high temperature properties of a positive electrode active material layer are greatly affected by $I_D/I_G$ of the carbon nanotubes which are the linear conductive material. Based on the discovery, as a result of analyzing the electrical properties and high temperature cycle characteristics of the positive electrode active material layer depending on $I_D/I_G$ of the carbon nanotubes, it was confirmed that when $I_D/I_G$ of the carbon nanotubes included in the positive electrode layer is 0.10 or less, the internal resistance of the active material layer is greatly lowered, and furthermore, the high temperature cycle characteristics of the positive electrode are also significantly improved, and also, stable electrical conduction properties may be secured even with a small amount of a conductive material, thereby allowing implementation of a high density/high output battery, and thus, the present invention has been completed. In the present invention, $I_D/I_G$ of the carbon nanotubes is the physical properties of the carbon nanotubes, not during use as a raw material in the production of a positive electrode active material layer, but in a state of being introduced into a positive electrode active material layer.

The positive electrode for a lithium secondary battery according to the present invention includes: a current collector; and a positive electrode active material layer including a positive electrode active material and carbon nanotubes, placed on the current collector, wherein the carbon nanotubes included in the positive electrode active material layer have $I_D/I_G$ of 0.10 or less, the $I_D/I_G$ being a ratio of a peak intensity of a D band divided by a peak intensity of a G band in a Raman spectrum.

Here, $I_D/I_G$ may refer to a value obtained by dividing $I_D$ which is a maximum peak intensity of a D band peak positioned in a wavenumber region of 1320 to 1380 cm$^{-1}$ by $I_G$ which is a maximum peak intensity of a G band peak positioned in a wavenumber region of 1560 to 1600 cm$^{-1}$, in a Raman spectrum of the carbon nanotubes. Without being necessarily limited thereto, experimentally, a Raman spectrum may be measured using a Raman spectrometer (as an example, inVia from Renishaw) with a laser having a wavelength of 523 nm, a spot size of 1 $\mu$m, and a power of 0.5-20 mW, at room temperature in the atmosphere. Experimentally, $I_D/I_G$ may be a value obtained by irradiating laser on each of 5 or more random areas, specifically 10 or more random areas of a positive electrode active material layer surface to obtain the Raman spectrum of carbon nanotubes and averaging $I_D/I_G$ of carbon nanotubes obtained from each Raman spectrum.

The positive electrode active material layer includes the carbon nanotubes having $I_D/I_G$ of 0.10 or less, thereby greatly improving the internal resistance of the positive electrode, and stably maintaining excellent electrical properties and preventing a side reaction even at a high temperature to significantly improve high temperature cycle characteristics.

As is known, the D band of the carbon nanotubes is a peak representing an $SP^3$ bond, related to a degree of disorder or defect produced when an $SP^2$ bond in the carbon nanotubes is broken, and the G band of the carbon nanotubes is a peak representing an $SP^2$ bond, related to a carbon crystal integrity having no structural defect. Thus, $I_D/I_G$ is an indicator representing a degree of disorder or defect present in the carbon nanotubes.

Without being necessarily bound by the following interpretation, it may be interpreted that the degree of disorder or defect present in the carbon nanotubes has a great influence on contact resistance between the carbon nanotubes and between the carbon nanotubes and other conductive materials or positive electrode active materials, and furthermore, also has a great influence on a degree of side reaction occurrence with an electrolyte solution at a high temperature, and thus, by using high crystalline carbon nanotubes having $I_D/I_G$ of 0.10 or less as a linear conductive materials, high temperature cycle characteristics as well as the internal resistance of a positive electrode are improved.

As an advantageous example, $I_D/I_G$ may be 0.100 or less, 0.090 or less, 0.080 or less, 0.070 or less, 0.060 or less, 0.050 or less, 0.040 or less, 0.030 or less, or 0.020 or less, and substantially more than 0, substantially 0.005 or more, and more substantially 0.010 or more. In particular, when $I_D/I_G$ is 0.06 or less, the resistance of the positive electrode may be significantly decreased to on the order of only 10% or less of the resistance of a positive electrode provided with a positive electrode active material layer including carbon nanotubes having $I_D/I_G$ of more than 0.1, in particular, on the order of 0.5 to 1.5 (reference positive electrode), and a capacity retention rate during charging and discharging may be increased to 5% or more as compared with the reference positive electrode. Thus, advantageously, the carbon nanotubes included in the positive electrode active material layer may have $I_D/I_G$ of more than 0 and 0.06 or less, more than 0 and 0.05 or less, more than 0 and 0.04 or less, more than 0 and 0.03 or less, or more than 0 and 0.02 or less, the $I_D/I_G$ being a ratio of the peak intensity of the D band divided by the peak intensity of the G band in the Raman spectrum.

The $I_D/I_G$ of the carbon nanotubes described above is $I_D/I_G$ in a state in which the carbon nanotubes are included in the positive electrode active material layer. As is noted, the positive electrode active material layer is produced by mixing raw materials including a positive electrode active material, a binder, a conductive material, and the like with a solvent to prepare a slurry, and then applying the slurry on a current collector and performing drying and rolling. Here, the positive electrode slurry is prepared by various processes, for example, stirring in which a strong physical force is applied at a high viscosity for homogeneous mixing and complexing may be performed when preparing the slurry, or premixing of the raw materials for complexation to be desired may be performed in the step before preparing the slurry, and then rolling with a compressive force is performed. In this process, as $I_D/I_G$ of the carbon nanotubes is increased, the physical properties of the carbon nanotubes in a state of a raw material and the physical properties of the carbon nanotubes in a state of being included in the active material layer should be clearly distinguished.

As a specific example, the carbon nanotubes may be any carbon nanotubes as long as the $I_D/I_G$ described above is satisfied. As an example, the carbon nanotubes may be single-walled carbon nanotubes, double-walled carbon nanotubes, multi-walled carbon nanotubes, or a mixture thereof, and as a substantial example, may be single-walled carbon nanotubes.

In a specific example, the positive electrode active material may have a bimodal particle size distribution. The positive electrode active material has the bimodal particle size distribution, thereby improving a density of the positive electrode active material. Specifically, when in the bimodal particle size distribution, a peak having a small peak center size (size distribution) is referred to as a first distribution and positive electrode active material particles belonging to the first distribution are referred to as fine particles, and a peak having a relatively large peak center size (size distribution) is referred to as a second distribution and positive electrode active material particles belonging to the second distribution are referred to as coarse particles, an empty space (interstitial site) between particles of the coarse particles is filled with fine particles and a fraction occupied by the positive electrode active material in the active material layer having the same thickness may be increased, a contact area with an electrolyte solution may be increased, and smooth movement and contact with an electrolyte solution may be maintained by open voids between particles (between coarse particles, between fine particles, or between coarse particles and fine particles).

A ratio of $D1_{50}/D2_{50}$ may be 0.15 to 0.35, specifically 0.20 to 0.35, the $D1_{50}/D2_{50}$ being $D1_{50}$ which is an average particle diameter of the first distribution (center size of the first distribution) divided by D2so which is an average particle diameter of the second distribution, so that an overall stable current migration path of the coarse particles and the fine particles may be formed by a linear conductive material including carbon nanotubes, along with an effective increase in an active material fraction and an increase in a contact area with an electrolyte solution. The ratio of $D1_{50}/D2_{50}$ as such is a size allowing fine particles to be positioned in a tetrahedral interstitial site or an octahedral interstitial site which is an interstitial site between coarse particles, and also a size allowing a substantially single fine particle to be fixed and positioned in each interstitial site. In a specific example, an average size of coarse particles ($D2_{50}$) may be on the order of 5 to 50 $\mu$m, specifically 10 to 30 $\mu$m, but is not necessarily limited thereto. The average size ($D_{50}$) refers to a particle diameter at 50% when the particles are accumulated from the smallest particle in order of particle diameter. Thus, $D1_{50}$ refers to a particle diameter at 50% when the particles are accumulated from the smallest particle in order of particle diameter in the first distribution, considering only the first distribution, and $D2_{50}$ refers to a particle diameter at 50% when the particles are accumulated from the smallest particle in order of particle diameter in the second distribution, considering only the second distribution. The particle size distribution (particle diameter distribution) of the positive electrode active material, the average size of the positive electrode active material, and the like may be measured using, for example, a laser diffraction method. Specifically, the particle diameter distribution may be measured by dispersing a positive electrode active material in a dispersion medium and then introducing the positive electrode active material to a laser diffraction particle size analyzer (for example, Mastersizer 3000, Malvern), and the measured particle diameter distribution may be used to calculate an average size.

The fine particles are positioned in interstitial sites of the coarse particles to increase an active material fraction, and also, a mass ratio of the fine particles to the coarse particles included in the positive electrode active material layer may be 1:2 to 5, specifically 1:3.5 to 4.5, so that the open voids of the positive electrode active material layer are stably maintained.

In a specific example, a long axis length of the carbon nanotubes may be on the order of 0.1 to 300 $\mu$m or 1 to 250 $\mu$m, but is not limited thereto.

However, when the positive electrode active material has the bimodal particle size distribution, the long axis length of the carbon nanotubes may satisfy $0.5D2_{50}$ to $5D2_{50}$, preferably $0.7D2_{50}$ to $4D2_{50}$, and more preferably $0.7D2_{50}$ to $3D2_{50}$, based on the average size ($D2_{50}$) of the coarse particles. It is advantageous for the carbon nanotubes to have the length described above, since a stable and uniform current migration path may be formed between coarse particles, between coarse particles and fine particles, and between fine particles, even with a small amount of carbon nanotubes, and the carbon nanotubes have excellent dispersibility.

In a specific example, the positive electrode active material may further include a point type conductive material, that is, a particulate conductive material. An example of the point type conductive material may be a conductive material such as natural graphite, artificial graphite, acetylene black, Ketjen black, channel black, furnace black, lamp black, thermal black, fluorocarbon, aluminum powder, nickel powder, and titanium oxides. However, it is preferred that the point type conductive material is a point type carbon-based conductive material, in terms of miscibility with carbon nanotubes which are a linear conductive material.

When the carbon nanotubes satisfying $I_D/I_G$ described above are included as a linear conductive material, a stable current migration path having a low contact resistance in the positive electrode active material layer may be formed even with a small amount of a conductive material, and a content of the conductive material may be decreased. Also, when the positive electrode active material has the bimodal particle size distribution, the fraction occupied by the positive electrode active material based on the active material layer having the same volume may be greatly increased. The increased fraction of the positive electrode active material and the decreased content of the conductive material have a risk of decreasing effective voids of the active material layer in a process such as rolling.

Thus, when the positive electrode active material layer includes the carbon nanotubes satisfying $I_D/I_G$ described above as a linear conductive material, and also the positive electrode active material has the bimodal particle size distribution, it is preferred to include carbon black as a point type conductive material. When carbon black is used as the point type conductive material together with the carbon nanotubes, a decrease in effective voids in rolling may be prevented and a stable current migration path may be formed in the positive electrode active material layer with a smaller amount of conductive material.

Carbon black has a specific surface area of 100 to 400 m$^2$/g, specifically 200 to 350 m$^2$/g, but is not necessarily limited thereto.

A specific example of carbon black may be acetylene black, Ketjen black, channel black, furnace black, lamp black, thermal black, a mixture thereof, or the like, but is not necessarily limited thereto.

A mass ratio of carbon nanotubes to the point type carbon-based conductive material, specifically carbon nanotubes to carbon black included in the positive electrode active material layer may be 1:0.2 to 3, preferably 1:1 to 3, more preferably 1:1 to 2.5, and more preferably 1:1.5 to 2.5.

The carbon nanotubes may be present in a form of crossing between positive electrode active materials and increase an electrical contact point between active materials to improve a conductivity, and the point type carbon-based conductive material may cover the surface of the positive electrode active material or be positioned in a space between active materials to improve a conductivity. A mass ratio between the point type carbon-based conductive material described above and the carbon nanotubes is a content at which the point type carbon-based conductive material, in particular, carbon black having an agglomeration structure, is mixed with the positive electrode active material and contributes to a conductive path as it is, and also the carbon nanotubes present in a form of crossing between positive electrode active materials are stably fixed and bound to the surface of the active material, while surface pore blockage by the point type carbon-based conductive material or agglomeration of the point type carbon-based conductive material may be prevented.

As described above, the positive electrode active material may have a bimodal particle size distribution. In a specific example, at least, the positive electrode active material belonging to the second distribution (coarse particles) in the bimodal particle size distribution may be secondary particles. Also, the positive electrode active material belonging to the first distribution may be primary particles, secondary particles, or mixed particles thereof.

The positive electrode active material which is secondary particles may be a spherical secondary particle form having a size of several to several tens of micrometers, as an example, on the order of 5 to 50 $\mu$m, specifically, 10 to 30 $\mu$m, so that the active material fraction in the positive electrode active material layer is increased, open voids at an appropriate level and size may be formed in the positive electrode active material layer, and the positive electrode active material has the specific surface area to suppress a side reaction with an electrolyte solution.

However, the secondary particulate active material as such has a risk of a severe increase in resistance during a lifetime as contraction and expansion are repeated due to repeated charging/discharging and boundary resistance between primary particles forming secondary particles is increased.

In order to solve a problem of an increase in resistance of the active material layer by the increased boundary resistance between primary particles forming secondary particles, the number of contact points between active material particles (secondary particles) and a conductive material should be large, and furthermore, contact resistance between the active material particles (secondary particles) and the conductive material and between the conductive materials is low so that it does not lead to an increase in resistance of the active material layer itself.

When the carbon nanotubes having $I_D/I_G$ of 0.10 or less, in particular 0.06 or less are used as the linear conductive material, the increase in resistance of the positive electrode active material layer by the increase in boundary resistance between primary particles forming secondary particles may be suppressed very effectively. Furthermore, when the point type carbon material of carbon black is used together with the carbon nanotubes satisfying $I_D/I_G$ described above, a resistance increase rate of the positive electrode may be effectively suppressed to 30% or less, based on 800 cycles in a high temperature charge and discharge cycle test.

The positive electrode active material layer may include the conductive component including 2 parts by weight or less, specifically 0.5 to 1.5 parts by weight, and more specifically 0.9 to 1.3 parts by weight of the linear conductive material including carbon nanotubes and the point type carbon-based conductive material, based on 100 parts by weight of the positive electrode active material. An amount of the conductive component included in the positive electrode according to a specific example may be small as compared with the positive electrode for a conventional common lithium secondary battery, and thus, the active material fraction in the active material may be increased.

The positive electrode active material included in the positive electrode active material layer may be any material capable of reversible desorption/insertion of lithium ions, and may be any electrode material used in the positive electrode of a common lithium secondary battery. As an example, the positive electrode active material may be an oxide of a layered structure represented by $LiMO_2$ (M is one or two or more transition metals selected from Co and Ni); $LiMO_2$ (M is one or two or more transition metals selected from Co and Ni) substituted with one or two or more different kinds of elements selected from Mg, Al, Fe, Ni, Cr, Zr, Ce, Ti, B, and Mn or coated with an oxide of the different kind of element; $Li_xNi_\alpha Co_\beta M_yO_2$ (x is a real number satisfying $0.8 \leq x \leq 1.5$, $\alpha$ is a real number satisfying $0.7 \leq \alpha \leq 0.9$, $\beta$ is a real number satisfying $0.05 \leq \beta \leq 0.35$, $\gamma$ is a real number satisfying $0.01 \leq \gamma \leq 0.1$, $\alpha + \beta + y = 1$, and M is one or more elements selected from the group consisting of Mg, Sr, Ti, Zr, V, Nb, Ta, Mo, W, B, Al, Fe, Cr, Mn, and Ce); $Li_xNi_aMn_bCo_cM_dO_2$ (x is a real number satisfying $0.9 \leq x \leq 1.1$, a is a real number satisfying $0.3 \leq \alpha \leq 0.6$, b is a real number satisfying $0.3 \leq b \leq 0.4$, c is a real number satisfying $0.1 \leq c \leq 0.4$ d is a real number satisfying $0 \leq d \leq 0.4$, a+b+c+d=1, and M is one or more elements selected from the group consisting of Mg, Sr, Ti, Zr, V, Nb, Ta, Mo, W, B, Al, Fe, Cr, and Ce), or the like; an oxide having a spinel structure represented by $Li_aMn_{2-x}M_xO_4$ (M is one or two or more elements selected from Al, Co, Ni, Cr, Fe, Zn, Mg, B, and Ti, a is a real number satisfying $1 \leq a \leq 1.1$, and x is a real number satisfying $0 \leq x \leq 0.2$), $Li_4Mn_5O_{12}$, or the like; or a phosphate-based material having an olivine structure represented by $LiMPO_4$ (M is Fe, Co, or Mn) or the like, a mixture thereof, or the like, but is not limited thereto.

The positive electrode active material layer may further include an organic binder, and the binder may be any material commonly used in the electrode of the lithium secondary battery and may be any polymer capable of binding the active materials and binding the active material and the current collector without chemically reacting with the electrolyte. A specific example of the binder of the positive electrode active material layer may include polyvinyl alcohol, carboxymethyl cellulose, hydroxypropyl cellulose, diacetyl cellulose, polyvinyl chloride, carboxylated polyvinyl chloride, polyvinylidene fluoride, a polymer including ethylene oxide, polyvinylpyrrolidine, polyurethane, polytetrafluoroethylene, polyethylene, polypropylene, a styrene-butadiene rubber, an acrylated styrene-butadiene rubber, an epoxy resin, nylon, and the like, but is not limited thereto. Here, the organic binder may be included at 0.5 to 3 parts by weight, specifically 1.0 to 1.5 parts by weight, based on 100 parts by weight of the positive electrode active material, but is not limited thereto.

In a specific example, the positive electrode may satisfy the following Equation 1:

(Equation 1)

$$R_B/R_B(ref) \leq 0.2$$

wherein $R_B$ is bulk resistance of the positive electrode for a lithium secondary battery, $R_B$(ref) is bulk resistance of a reference positive electrode which has the same composition as the positive electrode for a lithium secondary battery, but has $I_D/I_G$ in a Raman spectrum of the carbon nanotubes included of 1.0 or more. Here, $I_D/I_G$ of the carbon nanotubes included in the reference positive electrode may be substantially 1.5 or less. The Raman spectrum of the carbon nanotubes in the reference positive electrode is also $I_D/I_G$ of the carbon nanotubes measured in the Raman spectrum of the reference positive electrode itself, of course.

Specifically, $R_B/R_B$(ref) may be 0.2 or less, 0.15 or less, 0.10 or less, 0.9 or less, or 0.8 or less, and may be substantially 0.1 or more or 0.5 or more.

The positive electrode current collector may be any material as long as it has excellent conductivity and is chemically stable during battery charging and discharging. Specifically, the positive electrode current collector may be a conductive material such as graphite, graphene, titanium, copper, platinum, aluminum, nickel, silver, gold, aluminum, or carbon nanotubes, but the present invention is not limited thereto.

A method of forming a positive electrode is well known in the art, in which a positive electrode may be produced by mixing a positive electrode active material, an organic binder, and a conductive component including the carbon nanotubes described above to prepare an active material composition, coating the positive electrode current collector with the prepared active material composition, and performing rolling. As an example, the active material slurry may be prepared by first adding a point type carbon-based conductive material to a first composition in which a positive electrode active material is dispersed in a solvent and performing mixing to prepare a second composition, and then adding a carbon nanotube dispersion to the second composition and performing mixing, or by adding raw materials such as a point type carbon-based conductive material, a carbon nanotube dispersion, and a binder together to a first composition in which a positive electrode active material is dispersed in a solvent and performing mixing, but the present invention is not limited thereto.

The present invention includes a lithium secondary battery including the positive electrode described above.

Specifically, the lithium secondary battery may include the positive electrode described above; a negative electrode; a separator interposed between the positive electrode and the negative electrode; and an electrolyte, and the lithium secondary battery may be a prismatic lithium secondary battery or a pouch-type lithium secondary battery.

In a specific example, a capacity retention rate based on 1000 charge and discharge cycles at room temperature of the lithium secondary battery may be 88% or more, specifically 89% or more, 90% or more, 91% or more, or 91.5% or more.

The material or composition of the negative electrode, the separator, the solvent or electrolyte salt of the electrolyte, the concentration of the electrolyte salt, or the like may be materials or compositions commonly adopted in a lithium secondary battery.

As an example, the negative electrode may include a negative electrode active layer placed on at least one surface of a negative electrode current collector, and the negative electrode active material of the negative electrode active material layer may be a material commonly used in the negative electrode of a lithium secondary battery. As an example, the negative electrode active material may be one or two or more materials selected from lithium (metal lithium), easily graphitized carbon, hardly graphitized carbon, graphite, silicon, a Sn alloy, a Si alloy, a Sn oxide, a Si oxide, a Ti oxide, a Ni oxide, a Fe oxide (FeO), a lithium-titanium oxide ($LiTiO_2$, $Li_4Ti_5O_{12}$), a mixture thereof, or a composite thereof, but is not limited thereto.

As an example, the electrolyte may be a liquid electrolyte, and may be any non-aqueous electrolyte which conducts ions involved in charge and discharge of a battery well, in a common lithium secondary battery. As an example, the non-aqueous electrolyte may include a non-aqueous solvent and a lithium salt. The non-aqueous solvent may be ethylene carbonate, propylene carbonate, 1,2-butylene carbonate, 2,3-butylene carbonate, 1,2-pentylene carbonate, 2,3-pentylene carbonate, vinylene carbonate, vinyl ethylene carbonate, fluoroethylene carbonate, dimethyl carbonate, diethyl carbonate, di(2,2,2-trifluoroethyl) carbonate, dipropyl carbonate, dibutyl carbonate, ethyl methyl carbonate, 2,2,2-trifluoroethyl methyl carbonate, methyl propyl carbonate, ethyl propyl carbonate, 2,2,2-trifluoroethyl propyl carbonate, methyl isopropyl carbonate, methyl formate, ethyl formate, propyl formate, butyl formate, dimethyl ether, diethyl ether, dipropyl ether, methyl ethyl ether, methyl propyl ether, ethyl propyl ether, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, γ-butyrolactone, 2-methyl-γ-butyrolactone, 3-methyl-γ-butyrolactone, 4-methyl-γ-butyrolactone, γ-thiobutyrolactone, γ-ethyl-γ-butyrolactone, β-methyl-γ-butyrolactone, γ-valerolactone, α-valerolactone, γ-caprolactone, ε-caprolactone, β-propiolactone, tetrahydrofuran, 2-methyl tetrahydrofuran, 3-methyltetrahydrofuran, trimethyl phosphate, triethyl phosphate, tris(2-chloroethyl) phosphate, tris(2,2,2-trifluoroethyl) phosphate, tripropyl phosphate, triisopropyl phosphate, tributyl phosphate, trihexyl phosphate, triphenyl phosphate, tritolyl phosphate, methyl ethylene phosphate, ethyl ethylene phosphate, dimethyl sulfone, ethyl methyl sulfone, methyl trifluoromethyl sulfone, ethyl trifluoromethyl sulfone, methyl pentafluoroethyl sulfone, ethyl pentafluoroethyl sulfone, di(trifluoromethyl)sulfone, di(pentafluoroethyl) sulfone, trifluoromethyl pentafluoroethyl sulfone, trifluoromethyl nonafluorobutyl sulfone, pentafluoroethyl nonafluorobutyl sulfone, sulfolane, 3-methylsulfolane, 2-methylsulfolane, 3-ethylsulfolane, 2-ethylsulfolane, or a mixed solvent thereof, but is not limited thereto. The lithium salt may be a salt providing a lithium ion as a cation, and one or more ions selected from $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $AsF_6^-$, $BF_6^-$, $SbF_6^-$, $(CF_3)_6P^-$, $CF_3SO_3^-$, $CF_3CF_2SO_3^-$, $AlO_3^-$, $AlCl_4^-$, $C_4F_9SO(CF_3SO_2)_2N^-$, $(CF_3CF_2SO_2)_2N^-$, $(FSO_2)_2N^-$, $(C_2F_5SO_3)_2N^-$, $(F_3CF_2SO_2)_2N^-$ $(C_2F_5SO_2)_2N^-$, $(CF_3SO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $B_{10}Cl_{10}^-$, $C_4BO_8^-$, $B(C_2O_4)_2^-$, $CH_3SO_3^-$, and the like, as an anion, but is not limited thereto. A molar concentration of the lithium salt in the electrolyte may be on the order of 0.5 to 2.0 M, but is not limited thereto.

As an example, the separator may be a common fine porous film which is used to separate the positive electrode and the negative electrode and provide a lithium ion migration path in a lithium secondary battery. The fine porous film may be a multilayer film of glass fiber, polyester, polyethylene, polypropylene, polytetrafluoroethylene, polyvinylidene fluoride, or two or more thereof, or a porous film having a coating layer of a ceramic component or a polymer material for securing thermal resistance or mechanical strength, but it not limited thereto.

(Example 1)

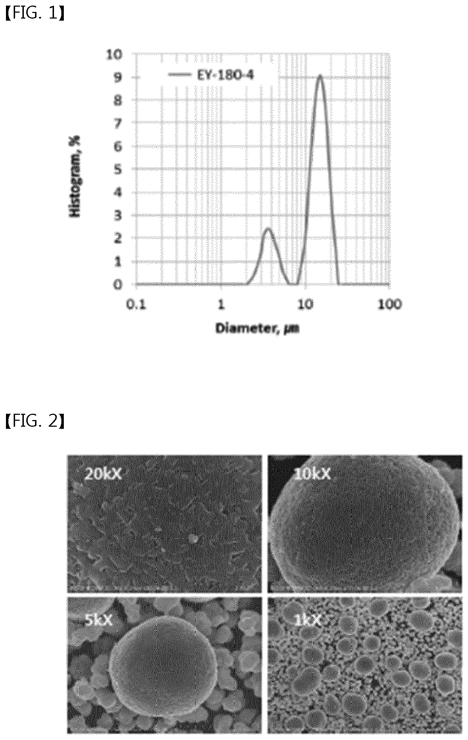

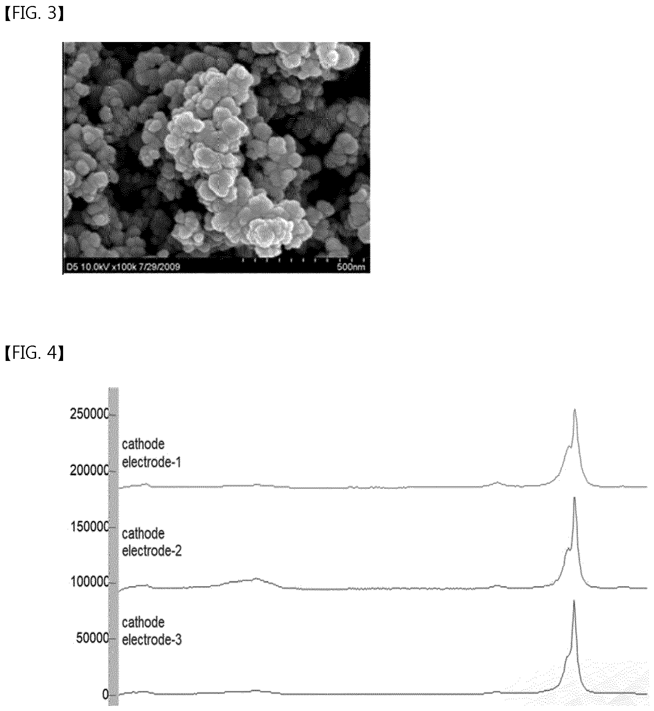

Carbon nanotubes (average length = 29 $\mu$m) were used as a linear conductive material and carbon black having a specific surface area of 254 m$^2$/g was used as a point type conductive material. A mixture of a coarse active material (NCM, 80% or more of Ni) which had an average particle size ($D_{50}$) of 16 $\mu$m and was secondary particles and a fine active material (NCM, 80% or more of Ni) having an average particle size ($D_{50}$) of 4 $\mu$m at a weight ratio of 8:2 was used as a positive electrode active material. FIG. 1 is a drawing illustrating a measured particle size distribution of a positive electrode active material, FIG. 2 is scanning electron micrographs of a mixture of a coarse active material and a fine active material, and FIG. 3 is a scanning electron micrograph of carbon black.

0.8 parts by weight of carbon black, 0.4 parts by weight of carbon nanotubes (CNT, using a pre-dispersion), and 1.1 parts by weight of polyvinylidene fluoride, based on 100 parts by weight of the positive electrode active material were added to a solvent together, and mixing with stirring was performed at room temperature for 30 minutes to prepare an active material composition. The prepared active material composition was applied on an aluminum foil and dried, and rolling was performed (thickness before rolling: 200 um, thickness after rolling: 130 um) to produce a positive electrode.

FIG. 4 is a drawing illustrating a Raman spectrum of carbon nanotubes included in the positive electrode active material, measured at different positions of the positive electrode active material layer of the produced positive electrode. As shown in an example of FIG. 4, it was confirmed that all $I_D/I_G$ of carbon nanotubes measured by irradiating a layer on 10 random positions of the positive electrode active material layer was less than 0.06, and the average $I_D/I_G$ value was 0.04.

(Example 2)

A positive electrode was produced in the same manner as in Example 1, except that 0.2 parts by weight of carbon black and 0.6 parts by weight of carbon nanotubes were mixed based on 100 parts by weight of the positive electrode active material, in the preparation of the active material composition.

(Examples 3 and 4)

A lithium secondary battery was produced using the positive electrode produced in Example 1 (Example 3) or the positive electrode produced in Example 2 (Example 4).

Specifically, a mixture of graphite and a silicon oxide ($SiO_x$, $1 \le x \le 2$) at a mass ratio of 94:6 was used as a negative electrode active material, and 1.3 parts by weight of carboxymethyl cellulose (CMC) and 1.5 parts by weight of a styrene butadiene rubber (SBR) based on 100 parts by weight of the negative electrode active material were mixed to prepare an aqueous slurry. The prepared aqueous slurry was applied on a copper foil and dried, and then rolling was performed to produce a negative electrode. A 13 $\mu$m separator coated with ceramic was interposed between the positive electrode and the negative electrode, and then an electrolyte solution of a mixed solvent of ethylene carbonate and diethyl carbonate (volume ratio of 50:50) in which 1.0 M LiPF$_6$ was dissolved was used to produce a lithium secondary battery.

(Comparative Example 1)

An active material composition was prepared in the same manner as in Example 1, except that carbon nanotubes having $I_D/I_G$ of 1.11 which was different from that of the example was used as a linear conductive material, and the prepared active material composition was applied on an aluminum foil and dried in the same manner as in Example 1 and then rolling was performed to produce a positive electrode. Thereafter, the produced positive electrode was used to produce a lithium secondary battery in the same manner as in Example 3.

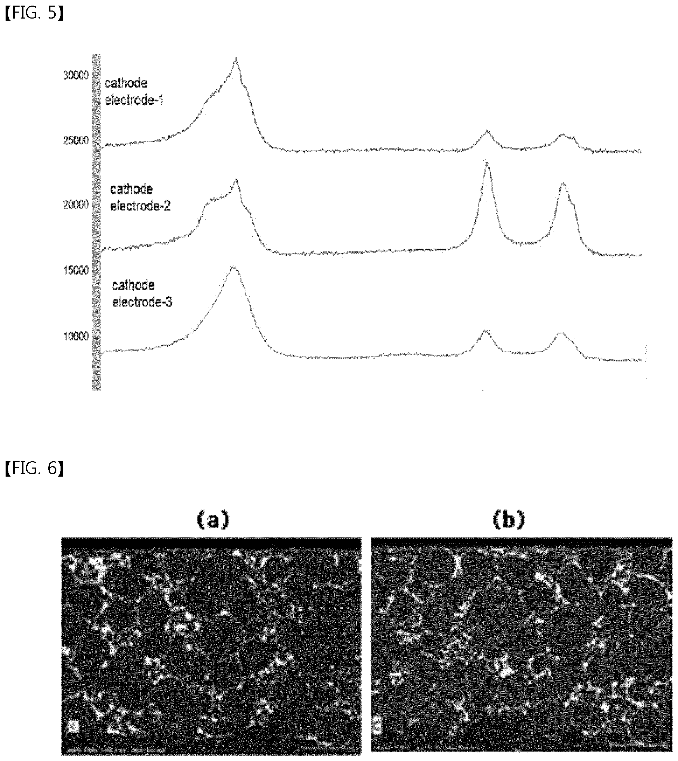

FIG. 5 is a drawing illustrating a Raman spectrum of carbon nanotubes included in the positive electrode active material, measured at different positions of the positive electrode active material layer produced in Comparative Example 1. As a result of irradiating a layer on 10 random positions of the positive electrode active material layer, it was found that the average $I_D/I_G$ of carbon nanotubes was 1.24.

(Comparative Example 2)

A positive electrode was produced in the same manner as in Example 1, except that the active material composition was prepared so that 2 parts by weight carbon black based on 100 parts by weight of the positive electrode active material was mixed, using only a point type conductive material (carbon black) without using a linear conductive material, and then a lithium secondary battery was produced in the same manner as in Example 3. Hereinafter, the positive electrode of Comparative Example 2 will be collectively referred to as a reference positive electrode.

<Analysis method and measurement conditions>

Raman analysis: laser wavelength of 523 nm, 1 $\mu$m spot size, exposure time of 10 seconds, measured using a Raman spectrometer (inVia, Renishaw) at 5% of laser full power at room temperature in the atmosphere. The $I_D/I_G$ of carbon nanotubes in the active material layer was obtained by irradiating a layer on each of 10 random positions on the surface of the positive electrode active material layer to obtain a Raman spectrum and averaging the obtained $I_D/I_G$ of carbon nanotubes. In the Raman spectrum of carbon nanotubes, the peak intensity (maximum intensity) of a G band positioned at a wave number of about 1,580 cm$^{-1}$ was taken as $I_G$, and the peak intensity (maximum intensity) of a D band positioned at a wave number of about 1,350 cm$^{-1}$ was taken as $I_D$.

Positive electrode effective void and average particle diameter: the pore size distribution of the active material layer was calculated using mercury penetration. As is known, in mercury penetration, a mercury cumulative penetration volume depending on external applied pressure is measured, and a pore radius into which mercury is penetrated at one pressure follows a Washburn equation.

CNT size: the diameter and length of carbon nanotubes were measured by scanning electron microscope observation.

Particle size distribution of positive electrode active material: the particle size distribution of the active material was measured using a laser diffraction particle size analyzer (Mastersizer 3000, Malvern).

Positive electrode resistance (bulk/boundary): positive electrode resistance was measured using an electrode resistance system (XF057 Probe unit, hioki) under the conditions of a current of 100 $\mu$A, a voltage range of 1 V, and the number of pin contacts of 500.

Discharge DC IR: discharge DC IR was calculated by dividing a voltage changing during discharging for 10 seconds with 1 C at SOC 50% by a current.

High temperature charge and discharge cycle of secondary battery: it was measured by setting the following as one cycle: at 45°C, charging at 0.3 C as constant current-constant voltage (CC-CV) under SOC 96% and 0.05 C cut-off conditions and then leaving for 10 minutes, and discharging at 0.5 C as constant current under SOC 2% cut-off conditions and then leaving for 10 minutes, and performing 1000 cycles.

Room temperature charge and discharge cycle of secondary battery: it was measured by setting the following as one cycle: at 25°C, charging at 0.3 C under SOC 96% cut-off conditions and then leaving for 10 minutes, and discharging at 0.5 C as constant current under SOC 2% cut-off conditions and then leaving for 10 minutes, and performing 1000 cycles.

FIG. 6 is photographs of the cross sections of the positive electrodes produced in Example 1 ((a) of FIG. 6) and Example 2 ((b) of FIG. 6), and in FIG. 6, it was found that the conductive component including linear conductive material and the point type conductive material was uniformly distributed throughout the positive electrode, it was found that the surface of the active material layer maintained an open pore state, and it was confirmed that a fine active material was positioned in a space between coarse active material particles.

In the process of producing the positive electrodes of Examples 1 and 2 and Comparative Example 2, the effective voids and the average diameter of the voids before rolling (after coating) and after rolling were measured, and the change rates thereof are summarized and shown in Table 1.

(Table 1)

| | After coating | After rolling | Change rate (%) | After coating | After rolling | Change rate (%) | Mixture density (g/cc) |
|---|---|---|---|---|---|---|---|
| | Effective void (mL/g) | | | Average size of void (nm) | | | |
| Example 1 | 3.68 | 1.51 | 58.9 | 4793 | 4313 | 10.0 | 3.68 |
| Example 2 | 4.12 | 1.52 | 63.1 | 4147 | 2855 | 31.1 | 3.69 |
| Comparative Example 2 | 4.05 | 1.52 | 62.4 | 4179 | 3441 | 17.7 | 3.69 |

As seen in Table 1, when carbon nanotubes having a length of about 1.8 times the coarse active material particle size and carbon black were used as a conductive material, the positive electrode had effective voids equivalent to the reference positive electrode (positive electrode of Comparative Example 2), and as in Example 1, it was found that when a mass ratio of the carbon nanotubes to carbon black was 1:2, the average size of voids after rolling was increased, so that the pore structure was better than the reference electrode.

The battery characteristics of the lithium secondary batteries produced with the positive electrodes of Example 1 and Comparative Example 1 are summarized and shown in Table 2.

(Table 2)

| | Example 1 | Comparative Example 1 |
|---|---|---|
| Discharge DC IR (m$\Omega$) | 1.113 | 1.165 |
| Positive electrode boundary resistance | 0.03 | 0.07 |
| Positive electrode bulk resistance | 1 | 13 |
| Energy density (Wh/L) | 698.7 | 691.2 |
| Room temperature cycle capacity retention rate (%) | 91.7 | 86 |
| High temperature cycle capacity retention rate (%) | 81.3 | 80 |

As seen from Table 2, the electrical properties such as DC IR, boundary resistance, and bulk resistance of the positive electrode depending on $I_D/I_G$ of carbon nanotubes in the positive electrode active material layer were significantly changed even in the positive electrodes of the same composition, and in particular, the positive electrode of the example having $I_D/I_G$ of 0.04 had a boundary resistance and a bulk resistance of on the order of only 42% and 7.7% of those of the positive electrode having $I_D/I_G$ of 1.24

In addition, it was found that the energy density, room temperature cycle characteristics, and high temperature cycle characteristics of a battery were also affected by $I_D/I_G$ of the carbon nanotubes in the positive electrode active material layer, and the secondary battery of the example having $I_D/I_G$ of 0.04 had a higher energy density and higher capacity retention rates at room temperature and at a higher temperature.

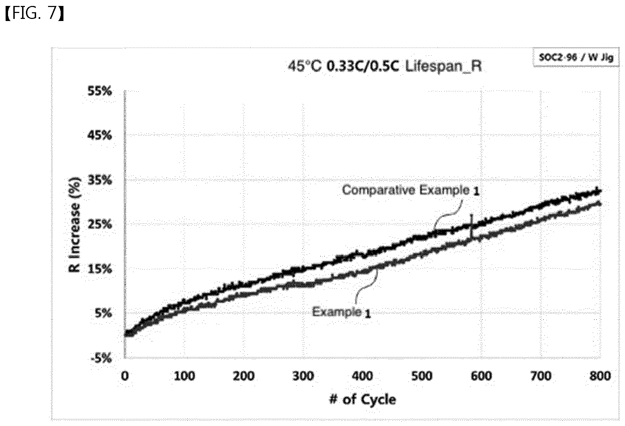

FIG. 7 is a drawing illustrating a measured resistance increase rate of the positive electrode produced in Example 1 and the positive electrode produced in Comparative Example 1 depending on the number of high temperature cycles. As seen from FIG. 7, the positive electrode of the example having $I_D/I_G$ of 0.04 had a significantly suppressed resistance increase even with the active material of secondary particles as an agglomerate included, and showed a resistance increase rate of 30% or less based on 800 cycles at a high temperature.

Hereinabove, although the present invention has been described by specific matters, limited exemplary embodiments, and drawings, they have been provided only for assisting the entire understanding of the present invention, and the present invention is not limited to the exemplary embodiments, and various modifications and changes may be made by those skilled in the art to which the present invention pertains from the description.

Therefore, the spirit of the present invention should not be limited to the above-described exemplary embodiments, and the following claims as well as all modified equally or equivalently to the claims are intended to fall within the scope and spirit of the invention.

**Claims**

1.  A positive electrode for a lithium secondary battery comprising:

    a current collector; and
    a positive electrode active material layer including a positive electrode active material and carbon nanotubes, placed on the current collector,
    wherein the carbon nanotubes have $I_D/I_G$ of 0.10 or less, the $I_D/I_G$ being a ratio of a peak intensity of a D band divided by a peak intensity of a G band in a Raman spectrum.

2.  The positive electrode for a lithium secondary battery of claim 1, wherein
    the $I_D/I_G$ is 0.05 or less.

3.  The positive electrode for a lithium secondary battery of claim 1, wherein
    the positive electrode active material has a bimodal particle size distribution.

4.  The positive electrode for a lithium secondary battery of claim 3, wherein
    $D1_{50}/D2_{50}$ is 0.15 to 0.35, the $D1_{50}/D2_{50}$ being a ratio of $D1_{50}$ which is an average particle diameter of a first distribution as a small particle size distribution divided by $D2_{50}$ which is an average particle diameter of a second distribution as a large particle size distribution in the bimodal particle size distribution.

5.  The positive electrode for a lithium secondary battery of claim 4, wherein
    a mass ratio of the positive electrode active material belonging to the first distribution to the positive electrode active material belonging to the second distribution is 1:2 to 5.

6.  The positive electrode for a lithium secondary battery of claim 3, wherein
    a long axis length of the carbon nanotubes is $0.5D2_{50}$ to $5D2_{50}$, based on $D2_{50}$ which is the average particle diameter of the second distribution as a large particle size distribution in the bimodal particle size distribution.

7.  The positive electrode for a lithium secondary battery of claim 3, wherein
    at least, the positive electrode active material belonging to the second distribution as a large particle size distribution in the bimodal particle size distribution is secondary particles.

8.  The positive electrode for a lithium secondary battery of claim 1, wherein
    the positive electrode layer further includes a point type carbon-based conductive material.

9.  The positive electrode for a lithium secondary battery of claim 8, wherein
    the point type carbon-based conductive material includes carbon black.

10. The positive electrode for a lithium secondary battery of claim 9, wherein
    the carbon black is one or more selected from acetylene black, Ketjen black, channel black, furnace black, lamp black, and thermal black.

11. The positive electrode for a lithium secondary battery of claim 8, wherein
    the positive electrode active material layer includes 2 parts by weight or less of a conductive component including a linear conductive material including the carbon nanotubes and the point type carbon-based conductive material, based on 100 parts by weight of the positive electrode active material.

12. The positive electrode for a lithium secondary battery of claim 9, wherein
    a mass ratio of the carbon nanotubes to the point type carbon-based conductive material included in the positive electrode active material layer is 1:0.2 to 3.

13. The positive electrode for a lithium secondary battery of claim 9, wherein

    the positive electrode satisfies the following Equation 1:

(Equation 1)

$$R_B/R_B(ref) \leq 0.2$$

wherein $R_B$ is bulk resistance of the positive electrode for a lithium secondary battery, and $R_B(ref)$ is bulk resistance of a reference positive electrode which has the same composition as the positive electrode for a lithium secondary battery, but has $I_D/I_G$ in a Raman spectrum of the carbon nanotubes included of 1.0 or more.

14. A lithium secondary battery comprising: the positive electrode according to any one of claim 1 to 13.

15. The lithium secondary battery of claim 14, wherein
a capacity retention rate of the lithium secondary battery based on 1000 charge and discharge cycles at room temperature is 88% or more.

【FIG. 1】

【FIG. 2】

【FIG. 3】

【FIG. 4】

【FIG. 5】

【FIG. 6】

【FIG. 7】

**EP 4 057 380 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170111517